# FASCICULE DE BREVET EUROPEEN

(11) **EP 4 515 376 B1**
(45) Date de publication et mention de la délivrance du brevet: **31.12.2025**
(21) Numéro de dépôt: 23716579.0
(22) Date de dépôt: 05.04.2023
(51) Int. Cl.: G06F 8/65, G06F 9/445, G06F 11/3668

(54) **MISE À JOUR DE CONFIGURATIONS**
AKTUALISIERUNG VON KONFIGURATIONEN
UPDATE OF CONFIGURATIONS

(30) Priorité: 26.04.2022 FR 2203891
(43) Date de publication de la demande: 05.03.2025
(73) Titulaire: Streamwide, 75010 Paris (FR)
(72) Inventeur: ABIDI, Soufien, 1053 Tunis (TN)
(74) Mandataire: Plasseraud IP
(86) Numéro de dépôt international: PCT/EP2023/058942
(87) Numéro de publication internationale: WO 2023/208550

(56) Documents cités:
- US-A1- 2009 319 848
- US-A1- 2010 333 081
- US-A1- 2014 317 613

## Description

### Domaine technique

La présente divulgation relève du domaine des techniques de configurations et mises à jour de logiciels et applications installés sur des dispositifs communicants avec un ou plusieurs serveurs. Elle vise plus particulièrement les situations dans lesquels le parc de dispositifs inclut des appareils dont les logiciels internes (« firmwares ») sont variés et initialement inconnus du point de vue de tels serveurs.

### Technique antérieure

Dans le domaine de la maintenance de logiciels applicatifs (« software »), la responsabilité des mises à jour repose presque exclusivement sur le fournisseur dudit logiciel, typiquement les « applications » installées sur les ordiphones (ou « smartphones »). Or, les logiciels internes (« firmware ») de tels dispositifs peuvent présenter une grande variété qui découle de la grande variété de constructeurs, de modèles d'appareils et même de versions de firmwares pour un même modèle d'appareil. Du point de vue d'un fournisseur d'application tel que la demanderesse, de nouveaux firmwares apparaissent donc très souvent. Lorsqu'une nouvelle version d'un firmware apparait, typiquement avec un nouveau modèle de terminal, le fonctionnement de l'application peut être dégradé, voire être totalement incompatible avec le nouveau modèle de terminal. Pour maintenir au cours du temps une compatibilité de l'application avec un maximum d'appareils, les fournisseurs d'application déploient régulièrement des mises à jour des applications à destination de l'ensemble du parc de dispositifs alors même qu'une faible fraction d'entre eux (les plus récents) ont besoin d'une telle mise à jour. Une telle maintenance est complexe, couteuse et peu efficiente. US 2014/317613, US 2009/319848 et US 2010/333081 évoquent de telles problématiques de mise à jour.

### Résumé

La présente divulgation vient améliorer la situation.

Il est proposé un système comprenant au moins un terminal et un serveur aptes à communiquer l'un avec l'autre, une application dorsale et une application frontale correspondante étant installées respectivement sur le serveur et le terminal, le serveur ayant accès à au moins une base de données.
La base de données comprend :
- une liste de jeux d'identifiants, chaque jeu d'identifiants comprenant
   * un identifiant de terminal,
   * un identifiant d'une couche matérielle, et
   * un identifiant de système d'exploitation ;
- une table de correspondance entre
   * chaque paire d'identifiant d'une couche matérielle et d'identifiant de système d'exploitation existante dans ladite liste, et
   * un fichier de configuration, stocké lui-même dans l'au moins une base de données.
Le terminal et le serveur sont configurés en coordination l'un avec l'autre pour, à l'ouverture d'une session de communication entre le terminal et le serveur :
a. transmettre, depuis le terminal à destination du serveur, un jeu d'identifiants comprenant un identifiant du terminal, un identifiant d'une couche matérielle du terminal et un identifiant de système d'exploitation mis en œuvre sur le terminal ;
b. à réception sur le serveur depuis le terminal du jeu d'identifiants, comparer au contenu de la base de données, et
   - en cas de correspondance entre le jeu d'identifiants transmis et un jeu d'identifiants de ladite liste, poursuivre la session de communication sans mise à jour de la configuration du terminal ;
   - en cas d'absence de correspondance entre le jeu d'identifiants transmis et les jeux d'identifiants de ladite liste, et en cas de correspondance avec une paire d'identifiants d'une couche matérielle et de système d'exploitation de la table de correspondance,
      transmettre en retour, depuis le serveur à destination du terminal, le fichier de configuration associé à ladite paire selon la table de correspondance ;
   - en cas d'absence de correspondance avec une paire d'identifiants d'une couche matérielle et de système d'exploitation de la table de correspondance,
      identifier, dans la table de correspondance et par application de règles préétablies, une paire d'identifiants d'une couche matérielle et de système d'exploitation la plus proche de celle du jeu d'identifiants transmis depuis le terminal, puis transmettre en retour, depuis le serveur à destination du terminal, le fichier de configuration associé à la combinaison identifiée selon la table de correspondance, ledit fichier étant transmis avec un indicateur qualifiant le fichier de configuration de temporaire ;
c. alimenter la base de données avec le jeu d'identifiants reçus et l'éventuelle association découlant de l'identification
d. à réception d'un fichier de configuration sur le terminal depuis le serveur, implémenter ledit fichier de configuration dans l'application frontale, et
si et seulement si ledit fichier de configuration est porteur d'un indicateur qualifiant le fichier de temporaire, basculer l'application frontale dans un mode test.

Le terminal et le serveur peuvent en outre être configurés pour :
e. en réponse à une action prédéterminée de validation par l'utilisateur via le terminal,
   supprimer un indicateur qualifiant le fichier de temporaire sur le terminal,
   basculer l'application frontale dans un mode normal,
   transmettre, depuis le terminal à destination du serveur, une commande de validation dudit fichier de configuration temporaire
f. à réception sur le serveur depuis le terminal de la commande de validation du fichier de configuration temporaire, supprimer un indicateur qualifiant le fichier de temporaire dans l'association correspondante de la base de données.

Selon un autre aspect, il est proposé un procédé de configuration mis en œuvre par un terminal comprenant les opérations a et d, et optionnellement e, ci-avant.

Selon un autre aspect, il est proposé un procédé de configuration mis en œuvre par un serveur comprenant les opérations b et c, et optionnellement f, ci-avant.

Selon un autre aspect, il est proposé un terminal configuré pour la mise en œuvre d'un procédé tel que défini ci-avant.

Selon un autre aspect, il est proposé un serveur configuré pour la mise en œuvre d'un procédé tel que défini ci-avant.

Selon un autre aspect, il est proposé un programme informatique comportant des instructions pour la mise en œuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

En mettant à disposition des fichiers de configurations adaptés à chaque nouveau terminal se connectant au serveur (ou terminal présentant une nouvelle configuration), il est possible de réduire le nombre et la fréquence des mises à jour complètes de l'application à déployer sur l'ensemble des terminaux. La création d'un fichier de configuration est bien plus aisée que le déploiement d'une mise à jour complète, notamment parce que la compatibilité doit être vérifiée avec le terminal ou la configuration visée plutôt qu'avec l'ensemble du parc de terminaux. La taille d'un fichier de configuration est très inférieure à ceux d'une mise à jour complète d'une application, ce qui permet donc de réduire le temps et les ressources matérielles et logicielles nécessaires pour transmettre de tels fichiers via les réseaux de télécommunication, puis les installer. Du point de vue des utilisateurs des terminaux, il devient inutile de mettre à jour l'application tant que le terminal utilisé n'est pas modifié.

D'un point de vue global, la mise à disposition d'un nouveau fichier de configuration bénéficie à chacun des utilisateurs d'un terminal présentant une configuration correspondante, tout en impactant pas les autres utilisateurs du service. En amont, un utilisateur mettant en œuvre un fichier de configuration en mode « test » valide ou non son bon fonctionnement, de sorte que l'intervention d'un opérateur du fournisseur de l'application est nécessaire seulement en cas de dysfonctionnement.

### Brève description des dessins

D'autres caractéristiques, détails et avantages apparaîtront à la lecture de la description détaillée ci-après, et à l'analyse des dessins annexés, sur lesquels :
**Fig. 1**

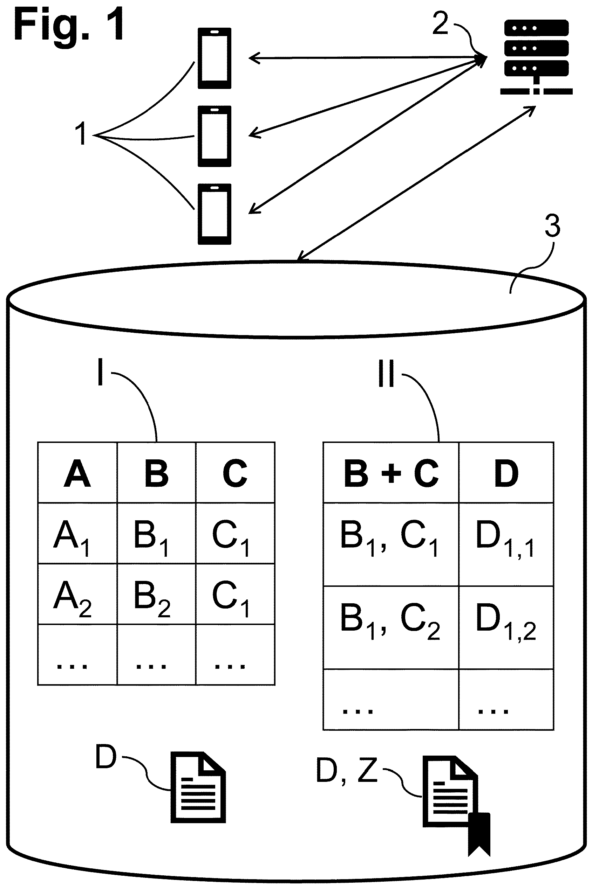

   [Fig. 1] représente des éléments du système selon un mode de réalisation.
**Fig. 2**

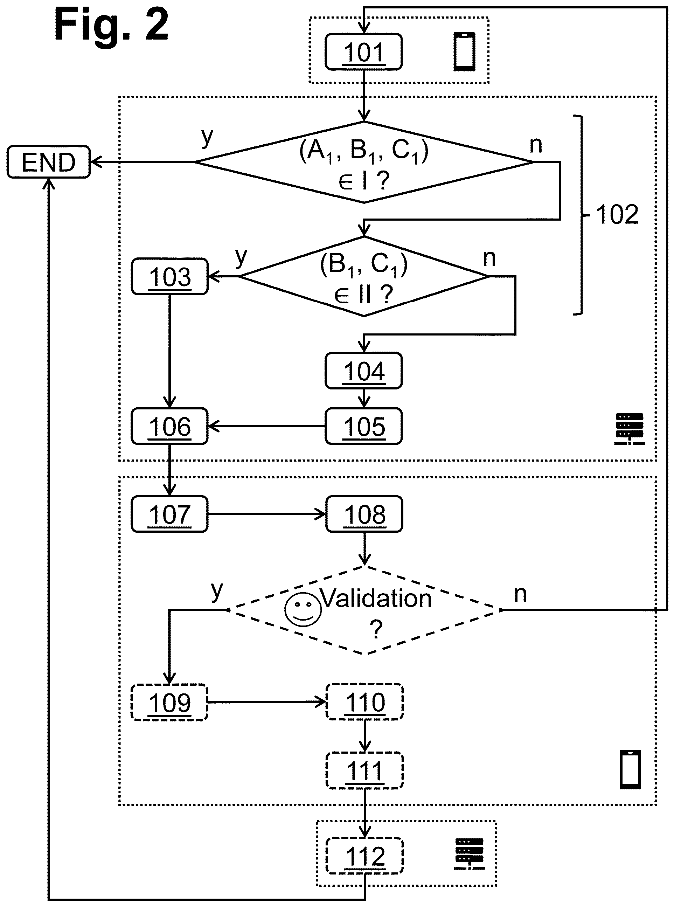

   [Fig. 2] est un diagramme de mise en œuvre selon un mode de réalisation.
**Fig. 3**

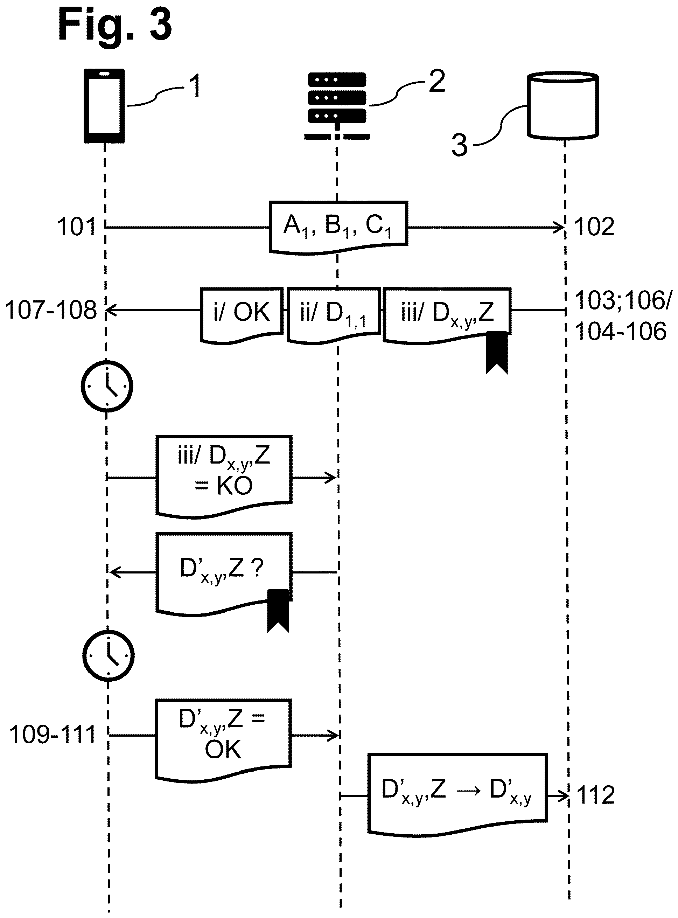

   [Fig. 3] représente des échanges de données entre des éléments d'un système selon un mode de réalisation.

### Contexte

Dans la suite, les termes francophones « application frontale » et « application dorsale » sont utilisés pour distinguer ce qu'un technicien, même non anglophone, appelle respectivement le « frontend » et le « backend ». De même, les termes francophones « logiciel interne » et « application/logiciel applicatif » sont utilisés pour distinguer ce qu'un technicien appelle respectivement « firmware » et « software ».

Ce qui est décrit ci-après a été mis en œuvre par la demanderesse dans le contexte des communications à l'alternat (« half-duplex ») via les réseaux de téléphonie mobile, plus connues sous l'acronyme « PTT » pour « Push-to-Talk », et notamment de ses services connus sous les noms commerciaux « Team on the run » et « Team on mission ». En substance, il s'agit de proposer des solutions de communication qui, du point de vue des utilisateurs, semblent se comporter comme les émetteurs-récepteurs radio « walkie-talkie » (maintien d'un bouton pour parler sur un canal, relâchement du bouton pour libérer la parole sur le canal et passer en mode écoute), tout en présentant des propriétés permises par les réseaux et protocoles de communication récents (combinaison audio/vidéo ; compatibilité et interopérabilité avec un grand nombre de terminaux mobiles ou fixes ; chiffrement des communications ; géolocalisation ; changement à la volée de réseau ; etc.). En pratique, la mise en œuvre de ce qui suit est donc particulièrement bénéfique dans le contexte de communications PTT, sans pour autant s'y limiter.

La mise en œuvre de ce qui suit est en outre particulièrement avantageuse dans les situations pour lesquelles l'accès physique aux terminaux et à certaines informations relatives à leur configuration est difficile, voire impossible, pour le gestionnaire du logiciel applicatif. Cela est typiquement le cas pour des raisons de confidentialité et de sécurité lorsque les terminaux sont utilisés par des personnes aux activités dites sensibles (police, maintien de l'ordre, sécurité civile, services d'urgence en cas de catastrophe, opérations dans des zones où la couverture réseau n'est pas fiable, etc.).

### Description des modes de réalisation

Il est maintenant fait référence à la [Fig. 1]. Un système comprend au moins un terminal 1, ici trois, un serveur 2 et une base de données 3. Le terminal 1 et le serveur 2 sont chacun un dispositif adapté pour communiquer (c'est-à-dire échanger des données) via un ou plusieurs réseaux de télécommunication, notamment l'un avec l'autre. Le terminal 1 peut ainsi correspondre à un appareil de communication fixe ou mobile, par exemple un ordiphone (ou « smartphone ») ou un ordinateur, à disposition d'un utilisateur. Le serveur 2 désigne un équipement distant du terminal 1 et géré par un fournisseur de service tel qu'un fournisseur d'application. La base de données 3 est accessible au serveur 2. La base de données 3 est représentée ici comme une entité distincte du serveur 2. En variante, la base de données 3 est un sous-ensemble du serveur 2. Les échanges de données entre le terminal 1, le serveur 2 et la base de données 3 peuvent impliquer des composants intermédiaires. Autrement dit, les transmissions de données ne sont pas obligatoirement directes entre les éléments précités.

Le terminal 1 inclut une interface homme-machine. L'interface homme-machine est une expression utilisée en tant que terme générique pour désigner l'ensemble des équipements et composants logiciels du terminal 1 qui permettent à l'utilisateur d'interagir avec le terminal 1, tant pour recevoir des informations du terminal 1 que pour en entrer dans le terminal 1. L'interface homme-machine prend par exemple la forme d'un écran tactile connu en tant que tel. L'interface homme-machine peut, en variante, prendre d'autres formes telles qu'un microphone pour l'acquisition de commandes vocales, un haut-parleur pour la diffusion d'information sous forme audio, un vibreur pour diffuser des informations sous forme haptique ou encore une combinaison de tels composants.

Le terminal 1 comprend au moins un processeur et un organe de mémoire configurés pour que le processeur exécute des programmes enregistrés sur l'organe mémoire. Les programmes comprennent :
- des logiciels internes (« firmwares »), généralement installés au moment de la fabrication et des paramétrages d'usine du terminal 1, et ensuite mis à jour sous la responsabilité de l'entité commercialisant le terminal 1 ;
- des logiciels applicatifs (« software »), généralement installés *a posteriori à* l'initiative de l'utilisateur du terminal 1 et mis à jour sous la responsabilité d'une entité qui est souvent distincte du fournisseur du terminal 1.

Sur le terminal 1 est installée la partie frontale (« frontend ») d'une application, tandis que la partie dorsale (« backend ») de l'application est installée sur le serveur 2.

Dans le présent contexte, le serveur 2 peut comprendre plusieurs appareils et composants logiciels agencés pour interagir les uns avec les autres. Autrement dit, le serveur 2 n'est pas nécessairement constitué d'un unique appareil physique monobloc mais peut au contraire comprendre plusieurs modules distincts et distants les uns des autres. Le serveur 2 comprend par exemple au moins un processeur et un ou plusieurs organes mémoires propres à stocker des bases de données accessibles à l'au moins un processeur. Dans l'exemple décrit ici, le serveur 2 comprend en outre une interface de programmation d'applications, ou API pour *« Application Programming Interface* ». L'API s'interface entre un module de communication du serveur 2 et la bases de données 3. Une ou plusieurs API peuvent également être prévues pour que des opérateurs y accèdent.

La base de données 3 contient au moins les données suivantes :
- une liste I de jeux d'identifiants ;
- une table de correspondance II ;
- des fichiers de configuration D, dont optionnellement un ou plusieurs fichiers de configuration « temporaires » référencés D, Z.

Chaque jeu d'identifiants de la liste I comprend :
* un identifiant A de terminal,
* un identifiant B d'une couche matérielle, et
* un identifiant C de système d'exploitation.
En pratique, la liste I répertorie chaque terminal 1 qui se connecte auprès du serveur 2 avec des informations sur sa couche matérielle et son système d'exploitation. Lorsqu'un terminal 1 change de couche matérielle et/ou de système d'exploitation, puis qu'il se connecte à nouveau au serveur 2, il génère donc une nouvelle entrée dans la liste I (un nouveau jeu d'identifiants distinct du jeu d'identifiants généré lors de sa connexion précédente).

La table de correspondance Il comprend des associations entre :
* chaque paire B ; C d'identifiant d'une couche matérielle et d'identifiant de système d'exploitation existante de la liste I, et
* un fichier de configuration D.
Ainsi, la liste I peut comprendre plusieurs jeux d'identifiants qui diffèrent par l'identifiant de terminal A mais qui présentent le même identifiant de couche matérielle B et le même identifiant de système d'exploitation C. Dans ce cas, la table de correspondance Il comprend une unique association entre ladite paire d'identifiants B ; C et un fichier de configuration D. Une pluralité de terminaux distincts mais présentant une configuration commune sont donc indirectement associés à un même fichier de configuration D. Cette situation correspond en pratique à une flotte de terminaux similaires qui peuvent être configurés de manière similaire.

II est maintenant fait référence aux [Fig. 2] et [Fig. 3]. L'au moins un terminal 1 et le serveur 2 sont configurés en coordination l'un avec l'autre pour mettre en œuvre des opérations. On parle de « coordination » en ce que certaines opérations sont mises en œuvre plutôt depuis le terminal 1 tandis que d'autres opérations sont mises en œuvre plutôt depuis le serveur 2. Sur la [Fig. 2], des icônes représentant le terminal 1 et le serveur 2 sont accolés aux opérations afin d'identifier l'élément du système à l'origine de chaque opération selon le mode de réalisation décrit. Néanmoins, pour faciliter la compréhension, les opérations mises en œuvre sont présentées dans un ordre chronologique indépendamment de l'élément du système qui le met en œuvre. Il reste aisé de décomposer les opérations en fonction de l'élément du système qui les met en œuvre, comme en [Fig. 3], afin de définir distinctement un procédé mis en œuvre par le terminal, et un procédé mis en œuvre par le serveur, liés entre eux de telle sorte qu'ils ne forment qu'un seul concept inventif général.

Dans l'exemple décrit ici, l'ouverture d'une session de communication entre le terminal 1 et le serveur 2 est l'élément déclencheur des opérations décrites ci-après. Autrement dit, le déclenchement de la mise à jour de configuration fait suite à la connexion du terminal 1 auprès du serveur 2. En variante, d'autres déclencheurs sont prévus, par exemple une action/manipulation de l'utilisateur du terminal 1 via son interface homme-machine.

Les procédés pour lesquels sont configurés le terminal 1 et le serveur 2 comprennent les opérations décrites ci-après.

Une première opération 101 comprend :
a. transmettre, depuis le terminal à destination du serveur, un jeu d'identifiants. Le jeu d'identifiants comprend :
   - un identifiant A₁ du terminal 1 ,
   - un identifiant B₁ d'une couche matérielle du terminal 1, et
   - un identifiant C₁ de système d'exploitation mis en œuvre sur le terminal 1.

La transmission du jeu d'identifiants A₁, B₁, C₁ peut prendre la forme d'une réponse à une requête émise par le serveur 2, ou bien être à l'initiative du terminal 1, par exemple inclus dans une requête de mise à jour de fichiers de configuration ou une requête d'établissement ou d'accès à une session de communication.

Une opération 102 comprend :
b. à réception sur le serveur 2 depuis le terminal 1 du jeu d'identifiants A₁, B₁, C₁, comparer (ledit jeu) au contenu de la base de données 3.

En fonction des résultats des comparaisons, diverses opérations sont mises en œuvre. En particulier :
i/ en cas de correspondance entre le jeu d'identifiants A₁, B₁, C₁ transmis et un jeu d'identifiants de la liste I,
   poursuivre la session de communication sans mise à jour de la configuration du terminal 1. Dans ce cas, il est considéré que le terminal 1 dans sa configuration courante s'était déjà connecté préalablement au serveur 2 et que son fichier de configuration est donc à jour : il est inutile de le mettre à jour à nouveau et il peut donc être mis fin aux procédés de mise à jour pour continuer la session de communication de manière connue en soit.
ii/ en cas d'absence de correspondance entre le jeu d'identifiants A₁, B₁, C₁ transmis et les jeux d'identifiants de ladite liste I,
   et en cas de correspondance avec une paire B₁, C₁ d'identifiants d'une couche matérielle et de système d'exploitation de la table de correspondance II,
   mettre en œuvre une opération 103 décrite ci-après.
iii/ en cas d'absence de correspondance avec une paire Bₓ, C_{y} d'identifiants d'une couche matérielle et de système d'exploitation de la table de correspondance II,
mettre en œuvre une opération 104 et une opération 105 décrites ci-après.

L'opération 103 comprend :
transmettre en retour, depuis le serveur 2 à destination du terminal 1, le fichier de configuration D_{1,1} associé à ladite paire B₁, C₁ selon la table de correspondance II. Cette situation correspond à celle d'un terminal 1 qui se connecte pour la première fois, du moins dans sa configuration courante, au serveur 2 (car jamais enregistré dans la base de données 3 avec les identifiants B₁ et C₁). Néanmoins, l'existence de la paire d'identifiants B1 et C₁ implique qu'un fichier de configuration D_{1,1} présumé adapté à une telle configuration est disponible dans la base de données 3. Cette existence peut résulter d'une implémentation préalable du fichier de configuration D_{1,1} par un opérateur sur le serveur 2 et/ou, par exemple, de la mise en œuvre préalable d'un procédé tel que décrit ici par un autre terminal présentant la même configuration (B₁ et C₁). On comprend alors que la mise en œuvre des procédés décrits ici par un premier terminal bénéficie ensuite aux terminaux présentant des configurations similaires.

À l'issue de l'opération 103, les procédés peuvent se poursuivre par la mise en œuvre d'opérations 106 et/ou 107 décrites ci-après.

L'opération 104 comprend :
identifier, dans la table de correspondance II et par application de règles préétablies, une paire Bₓ, C_{y} d'identifiants d'une couche matérielle et de système d'exploitation la plus proche de celle du jeu d'identifiants B₁, C₁ transmis depuis le terminal 1.

Les règles préétablies pour définir la paire d'identifiants Bₓ, C_{y} la plus proche de la paire d'identifiants transmis B₁, C₁ sont construites de manière à maximiser la probabilité que le fichier de configuration Dₓ,_{y} correspondant soit compatible aussi avec la configuration (B₁, C₁) du terminal 1 même si la configuration du terminal 1 n'est pas strictement identique à la configuration pour laquelle le fichier de configuration Dₓ,_{y} a été créé. Par exemple, on peut définir la notion de proximité en appliquant une première règle classant les paires présentant un identifiant B commun (B₁=Bₓ) comme plus proches l'une de l'autre que les paires présentant un identifiant C commun (C₁=C_{y}), les paires présentant un identifiant C commun étant elles-mêmes plus proches l'une de l'autre que les paires ne présentant ni identifiant B commun, ni identifiant C commun. Une seconde règle peut ensuite classer entre elles (plus finement) les paires obtenant un même classement par l'application de la première règle. Une telle seconde règle peut par exemple classer les paires comme étant les plus proches l'une de l'autre lorsque les deux identifiants (B₁ et Bₓ, ou C₁ et Cₓ) correspondent à des versions d'un même concepteur/constructeur et/ou lorsque leurs numéros de versions sont proches. De manière imagée, les règles peuvent être construites de sorte qu'une paire d'identifiants B₁ = « bidule_phone_13 » et C₁ = « eOS_13.4 » soit considérée plus proche de la paire d'identifiants Bₓ = « bidule_phone_13 » et C_{y} = « eOS_13.3 » que de la paire d'identifiants Bₓ = « G_phone_4 » ; C_{y} = « gOS_4.42 ». La construction des règles peut présenter une grande variété mais reste à la portée d'une personne du métier et dépend du contexte d'usage.

En variante, les règles préétablies peuvent être basiques, par exemple construites pour sélectionner par défaut la dernière paire d'identifiants enregistrée dans la table II.

À l'issue de l'opération 104, une opération 105 est mise en œuvre. L'opération 105 comprend :
transmettre en retour, depuis le serveur 2 à destination du terminal 1, le fichier de configuration Dₓ,_{y} associé à la combinaison identifiée Bₓ, C_{y} selon la table de correspondance II (identifiés à l'opération 104).

Dans les exemples décrits ici, le fichier Dₓ,_{y} est transmis avec un indicateur ou « tag » (ici sous la forme d'une référence « Z ») qualifiant le fichier de configuration D_{x,y}, Z de « temporaire ». Autrement dit, le fichier de configuration est identifiable comme n'étant pas encore validé/final. Dit encore autrement, il s'agit d'une « version béta » d'un fichier de configuration.

À l'issue de l'opération 105, les opérations 106 et/ou 107-108 sont mises en œuvre. On notera ici que les opérations 106 et 107-108 n'ont pas de dépendance l'une par rapport à l'autre. Elles peuvent donc être mises en œuvre en parallèle l'une de l'autre, ou chronologiquement l'une après l'autre dans un sens ou dans l'autre.

L'opération 106 comprend :
c. alimenter la base de données 3 avec le jeu d'identifiants reçus A₁, B₁, C₁ et l'éventuelle association découlant de l'identification B₁, C₁, D_{x,y}, Z.

Ajouter le jeu d'identifiants A₁, B₁, C₁ à la liste I revient à enregistrer/historiser la connexion du terminal 1 auprès du serveur 2. Ainsi, si le terminal 1 se connecte à nouveau ultérieurement avec la même configuration au serveur 2, la mise en œuvre des présents procédés conduiront à la situation « i » décrite ci-avant : il sera mis fin au processus pour continuer la session de communication sans mise à jour de la configuration du terminal 1. L'ajout de l'association B₁, C₁, D_{x,y}, Z à la table de correspondance Il est mis en œuvre seulement si une telle association vient d'être établie (dans le cas « iii » ci-dessus mais pas dans le cas « ii »). On notera ici que l'ajout d'une association pointant vers un fichier de configuration « temporaire » n'implique pas nécessairement que cette association est immédiatement accessible aux futurs terminaux qui se connecteraient au serveur 2. Il s'agit là d'un choix de conception qui dépend du contexte : les associations impliquant un fichier de configuration marqué comme temporaire et le fichier de configuration correspondant peuvent être masqués ou rendus inaccessibles afin d'empêcher le déploiement de fichiers de configuration non encore validés. Au contraire, par exemple pour accélérer le déploiement, les associations impliquant un fichier de configuration marqué comme temporaire et le fichier de configuration correspondant peuvent être rendus accessibles aux autres terminaux.

L'opération 107 comprend :
d. à réception d'un fichier de configuration D_{1,1} ; D_{x,y}, Z sur le terminal 1 depuis le serveur 2, implémenter ledit fichier de configuration dans l'application frontale (sur le terminal 1).

Par l'opération 107, l'application installée sur le terminal 1 n'est pas mise à jour en tant que telle mais son interaction avec la couche matérielle du terminal 1 est corrigée au moyen du fichier de configuration. Par exemple, les signaux de commande « bruts » issus de la couche matérielle, correspondant par exemple à une action de l'utilisateur via l'interface homme-machine du terminal 1, sont mieux reconnus par l'application et donc mieux traduits en entrées logicielles par l'application. Dans le contexte des communications PTT par exemple, l'appui, le maintien puis le relâchement d'un bouton, physique ou virtuel, est mieux reconnu comme une commande de prise de parole.

À l'issue de l'opération 107, l'opération 108 est mise en œuvre. L'opération 108 comprend : si et seulement si le fichier de configuration est porteur d'un indicateur qualifiant le fichier de temporaire, basculer l'application frontale du terminal 1 dans un mode test. Le mode test permet à l'utilisateur d'effectuer des essais de commande depuis son terminal, sans perturber le fonctionnement opérationnel des autres terminaux.

À l'issue des opérations 107 ou 108, les procédés de mise à jour de configuration peuvent être considérés comme terminés : des fichiers de configuration sont en cours de test. L'utilisateur du terminal 1 peut effectuer des tests, au besoin en étant assisté par un opérateur. Un mode de test guidé peut être intégré à l'application. Par exemple, l'utilisateur peut suivre des instructions d'interaction avec l'interface homme-machine du terminal 1 afin de permettre la reconnaissance de séquences d'actions humaines. Par exemple, il peut être demandé à l'utilisateur de simuler la prise de parole dans un canal de communication PTT en appuyant, maintenant pendant une durée prédéfinie (par exemple 3 secondes), puis relâchant un bouton (physique ou virtuel) du terminal 1 choisi par l'utilisateur. L'enregistrement par l'application des signaux de commandes issus de la couche matérielle du terminal 1 permet ensuite de les associer à la bonne action ou le bon évènement à déclencher par la couche logicielle (l'application), c'est-à-dire la prise de parole dans l'exemple ci-dessus. En mode opérationnel, la même action de l'utilisateur sera donc mieux « reconnue » par l'application.

Les essais effectués par l'utilisateur visent à vérifier si le comportement/fonctionnement de l'application est correcte, ou non, afin de valider, ou non, le fichier de configuration temporaire. Optionnellement, les actions simulées par l'utilisateur peuvent être enregistrées pour aider à la correction du fichier de configuration temporaire (si certaines actions humaines ne génèrent pas le comportement attendu de l'application).

Des exemples de réglages et fonctions testés qui peuvent être adaptés au moyen de fichiers de configuration sont donnés ci-après :
- l'appui sur un bouton, physique ou virtuel, le maintien appuyé sur le bouton pendant une ou plusieurs durées prédéterminées, puis le relâchement du bouton à la fin de ladite ou lesdites durées, par exemple pour correspondre à la fonction prise de parole sur un canal de communication PTT, puis la libération du canal ;
- l'appui bref sur un bouton (physique ou virtuel), ou bien une séquence d'appuis sur un ou plusieurs boutons (physiques et/ou virtuels), par exemple pour le déclenchement d'une alerte telle que l'envoi d'un « SOS » ;
- l'appui bref sur un bouton (physique ou virtuel), ou bien une séquence d'appuis sur un ou plusieurs boutons (physiques et/ou virtuels), par exemple pour basculer d'un canal de communication à un autre (fonction communément appelée « switch »).
- la détection et l'adaptation aux propriétés relatives à la gestion des flux audios et/ou vidéos propres au terminal 1, notamment les latences découlant de la configuration matérielle du terminal 1 qui sont des paramètres critiques dans les communications en temps réel.

Dans les exemples, il est fait mention d'un bouton. Néanmoins, des variantes d'interfaces peuvent être prévues, telles que des mouvements effectués sur un écran tactile.

Si l'utilisateur valide le fichier de configuration temporaire (« OK ») par une action via l'interface homme-machine du terminal 1, le processus de mise à jour peut se poursuivre, par exemple par la mise en œuvre de l'opération 109 décrite ci-après.

Si, au contraire, l'utilisateur ne valide pas le fichier temporaire, soit par une action spécifique, soit par une absence d'action pendant une période prédéterminée, un signal de non-validité (« KO ») du fichier de configuration peut être envoyé du terminal 1 à destination du serveur 2. De préférence, le signal de non-validité est accompagné de données issues des essais effectués par l'utilisateur en mode test. De telles données peuvent comprendre, par exemple :
- des associations entre les commandes issues de la couche matérielle du terminal 1 et le comportement attendu de l'application ; et/ou
- un fichier de configuration modifié (partiel ou complet) déterminé par la partie dorsale de l'application elle-même.

En fonction de la nature des données correctives transmises par le terminal 1 au serveur 2, un fichier de configuration corrigé peut être généré automatiquement (par la mise en œuvre d'un module correctif du serveur 2 sans intervention humaine), ou bien être créé par un opérateur humain accédant aux données correctives reçues sur le serveur 2.

Le fichier de configuration corrigé reste marqué « temporaire » (référencé D'_{x,y},Z » en [Fig. 3]) et peut être :
- envoyé en retour au terminal 1 pour réitérer les essais afin de confirmer sa validité ; et/ou
- ajouté à la base de données 3, en remplacement de la version précédente du fichier de configuration, de manière à être rendu accessible au moins au terminal 1, optionnellement à d'autres terminaux. Dans l'exemple décrit ici, le fichier de configuration corrigé reste marqué « temporaire » jusqu'à validation manuelle par un opérateur. D'autres règles de validation peuvent être mises en œuvre, par exemple une validation par un nombre minimum d'utilisateurs.

Une opération 109 comprend :
e. en réponse à une action prédéterminée de validation par l'utilisateur via le terminal 1,
supprimer un indicateur qualifiant le fichier de temporaire sur le terminal 1. Autrement dit, le fichier de configuration devient définitif/final à l'initiative de l'utilisateur du terminal 1.

Une opération 110 comprend :
basculer l'application frontale dans un mode normal. Autrement dit, le mode test, temporaire, est désactivé. L'application retrouve un fonctionnement normal et opérationnel.

Une opération 111 comprend :
transmettre, depuis le terminal 1 à destination du serveur 2, une commande de validation dudit fichier de configuration temporaire.

On notera que les opérations 109, 110 et 111 sont indépendantes et peuvent donc être mises en œuvre en parallèle les unes des autres ou à la suite les unes des autres dans un ordre quelconque.

Une opération 112 comprend :
f. à réception sur le serveur 2 depuis le terminal 1 de la commande de validation du fichier de configuration temporaire (suite à la mise en œuvre de l'opération 111 par exemple), supprimer un indicateur qualifiant le fichier de temporaire dans l'association correspondante B₁, C₁, D_{x,y}, Z de la base de données 3. L'opération 112 peut correspondre à la mise à disposition de l'association et du fichier de configuration correspondant aux autres terminaux 1 depuis le serveur 2. Dans l'exemple décrit ici, l'opération 112 marque la fin du procédé de mise à jour de configuration.

### Application industrielle

Les procédés de mise à jour ont été présentés comme mis en œuvre par le terminal 1 et le serveur 2. On comprendra que les procédés peuvent prendre la forme de programmes informatiques comportant des instructions pour la mise en œuvre des procédés lorsque ces programmes sont exécutés par un processeur, respectivement du terminal 1 ou du serveur 2. On visera aussi les supports d'enregistrement non transitoires lisibles par un ordinateur sur lesquels sont enregistrés des programmes pour la mise en œuvre des procédés décrits ici lorsque ces programmes sont exécutés par un processeur.

Les présentes solutions techniques peuvent trouver à s'appliquer notamment dans le contexte de la maintenance de programmes applicatifs d'un dispositif informatique, communément appelés « application ». Elles sont particulièrement avantageuses appliquées aux applications de communication à l'alternat par l'intermédiaire des réseaux de téléphonie mobile, notamment à cause de la grande variété des firmwares des terminaux mobiles en circulation, et aussi parce que les interactions entre l'utilisateur et son terminal dans ce domaine sont particulières (par exemple l'appui long puis le relâchement d'un bouton pour prendre puis libérer la parole sur un canal de communication).

La présente divulgation ne se limite pas aux exemples de systèmes, terminaux, serveurs, procédés, programmes et supports de programmes décrits ci-avant, seulement à titre d'exemples, mais elle englobe toutes les variantes que pourra envisager l'homme de l'art dans le cadre de la protection recherchée.

### Liste des signes de référence

- 1 : Terminal
- 2 : Serveur
- 3 : Base de données
- 101, 102, 103, 104, 105, 106, 107, 108, 109, 110, 111, 112 : opérations
- I : Liste
- Il : Table de correspondance
- A : Identifiant de terminal
- B : Identifiant d'une couche matérielle
- C : Identifiant de système d'exploitation
- D : Fichier de configuration
- Z : Marqueur de fichier temporaire.

## Revendications

1. Système comprenant au moins un terminal (1) et un serveur (2) aptes à communiquer l'un avec l'autre, caractérisé en que le système comprend en outre une application dorsale et une application frontale correspondante étant installées respectivement sur le serveur et le terminal, le serveur ayant accès à au moins une base de données (3) comprenant :
- une liste (I) de jeux d'identifiants, chaque jeu d'identifiants comprenant
* un identifiant de terminal (A),
* un identifiant d'une couche matérielle (B), et
* un identifiant de système d'exploitation (C) ;
- une table de correspondance (II) entre
* chaque paire (Bₓ ; C_{y}) d'identifiant d'une couche matérielle et d'identifiant de système d'exploitation existante dans ladite liste (I), et
* un fichier de configuration (D_{x,y}), stocké lui-même dans l'au moins une base de données le terminal et le serveur étant configurés en coordination l'un avec l'autre pour, à l'ouverture d'une session de communication entre le terminal et le serveur :
a. transmettre (101), depuis le terminal à destination du serveur, un jeu d'identifiants comprenant un identifiant (A₁) du terminal, un identifiant (B₁) d'une couche matérielle du terminal et un identifiant (C₁) de système d'exploitation mis en œuvre sur le terminal ;
b. à réception sur le serveur depuis le terminal du jeu d'identifiants (A₁, B₁, C₁), comparer (102) au contenu de la base de données, et
- en cas de correspondance entre le jeu d'identifiants (A₁, B₁, C₁) transmis et un jeu d'identifiants de ladite liste (I), poursuivre la session de communication sans mise à jour de la configuration du terminal ;
- en cas d'absence de correspondance entre le jeu d'identifiants (A₁, B₁, C₁) transmis et les jeux d'identifiants de ladite liste (I), et en cas de correspondance avec une paire (B₁, C₁) d'identifiants d'une couche matérielle et de système d'exploitation de la table de correspondance (II), transmettre (103) en retour, depuis le serveur à destination du terminal, le fichier de configuration (D_{1,1}) associé à ladite paire (B₁, C₁) selon la table de correspondance ;
- en cas d'absence de correspondance avec une paire (Bₓ, C_{y}) d'identifiants d'une couche matérielle et de système d'exploitation de la table de correspondance (II),
identifier (104), dans la table de correspondance (II) et par application de règles préétablies, une paire (Bₓ, C_{y}) d'identifiants d'une couche matérielle et de système d'exploitation la plus proche de celle du jeu d'identifiants (B₁, C₁) transmis depuis le terminal, puis transmettre (105) en retour, depuis le serveur à destination du terminal, le fichier de configuration (D_{x,y}) associé à la combinaison identifiée (Bₓ, C_{y}) selon la table de correspondance (II), ledit fichier étant transmis avec un indicateur (Z) qualifiant le fichier de configuration (D_{x,y}, Z) de temporaire ;
c. alimenter (106) la base de données avec le jeu d'identifiants reçus (A₁, B₁, C₁) et l'éventuelle association découlant de l'identification (B₁, C₁, D_{x,y}, Z)
d. à réception d'un fichier de configuration (D₁,₁ ; D_{x,y}, Z) sur le terminal depuis le serveur, implémenter (107) ledit fichier de configuration dans l'application frontale, et
si et seulement si ledit fichier de configuration est porteur d'un indicateur (Z) qualifiant le fichier de temporaire, basculer (108) l'application frontale dans un mode test.

2. Système selon la revendication 1 dans lequel le terminal et le serveur sont en outre configurés pour :
e. en réponse à une action prédéterminée de validation par l'utilisateur via le terminal,
supprimer (109) un indicateur (Z) qualifiant le fichier de temporaire sur le terminal,
basculer (110) l'application frontale dans un mode normal,
transmettre (111), depuis le terminal à destination du serveur, une commande de validation dudit fichier de configuration temporaire
f. à réception sur le serveur depuis le terminal de la commande de validation du fichier de configuration temporaire, supprimer (112) un indicateur (Z) qualifiant le fichier de temporaire dans l'association correspondante (B₁, C₁, D_{x,y}, Z) de la base de données.

3. Procédé de configuration mis en œuvre par un terminal (1) apte à communiquer avec un serveur (2), **caractérisé en ce qu'**une application dorsale et une application frontale correspondante sont installées respectivement sur le serveur et le terminal, le serveur ayant accès à au moins une base de données (3) comprenant :
- une liste (I) de jeux d'identifiants, chaque jeu d'identifiants comprenant
* un identifiant de terminal (A),
* un identifiant d'une couche matérielle (B), et
* un identifiant de système d'exploitation (C) ;
- une table de correspondance (II) entre
* chaque paire (Bₓ ; C_{y}) d'identifiant d'une couche matérielle et d'identifiant de système d'exploitation existante dans ladite liste (I), et
* un fichier de configuration (D_{x,y}), stocké lui-même dans l'au moins une base de données le procédé comprenant, à l'ouverture d'une session de communication entre le terminal et le serveur :
a. transmettre (101), depuis le terminal à destination du serveur, un jeu d'identifiants comprenant un identifiant (A₁) du terminal, un identifiant (B₁) d'une couche matérielle du terminal et un identifiant (C₁) de système d'exploitation mis en œuvre sur le terminal ;
d. à réception d'un fichier de configuration (D_{1,1} ; D_{x,y}, Z) sur le terminal depuis le serveur, implémenter (107) ledit fichier de configuration dans l'application frontale, et
si et seulement si ledit fichier de configuration est porteur d'un indicateur (Z) qualifiant le fichier de temporaire, basculer (108) l'application frontale dans un mode test.

4. Procédé selon la revendication 3, comprenant en outre :
e. en réponse à une action prédéterminée de validation par l'utilisateur via le terminal,
supprimer (109) un indicateur (Z) qualifiant le fichier de temporaire sur le terminal,
basculer (110) l'application frontale dans un mode normal,
transmettre (111), depuis le terminal à destination du serveur, une commande de validation dudit fichier de configuration temporaire.

5. Procédé de configuration mis en œuvre par un serveur (2) apte à communiquer avec au moins un terminal (1), **caractérisé en ce qu'**une application dorsale et une application frontale correspondante sont installées respectivement sur le serveur et le terminal, le serveur ayant accès à au moins une base de données (3) comprenant :
- une liste (I) de jeux d'identifiants, chaque jeu d'identifiants comprenant
* un identifiant de terminal (A),
* un identifiant d'une couche matérielle (B), et
* un identifiant de système d'exploitation (C) ;
- une table de correspondance (II) entre
* chaque paire (Bₓ ; C_{y}) d'identifiant d'une couche matérielle et d'identifiant de système d'exploitation existante dans ladite liste (I), et
* un fichier de configuration (D_{x,y}), stocké lui-même dans l'au moins une base de données le procédé comprenant, à l'ouverture d'une session de communication entre le terminal et le serveur : b. à réception sur le serveur depuis le terminal d'un jeu d'identifiants (A₁, B₁, C₁), comparer (102) au contenu de la base de données, et
- en cas de correspondance entre le jeu d'identifiants (A₁, B₁, C₁) transmis et un jeu d'identifiants de ladite liste (I), poursuivre la session de communication sans mise à jour de la configuration du terminal ;
- en cas d'absence de correspondance entre le jeu d'identifiants (A₁, B₁, C₁) transmis et les jeux d'identifiants de ladite liste (I), et en cas de correspondance avec une paire (B₁, C₁) d'identifiants d'une couche matérielle et de système d'exploitation de la table de correspondance (II),
transmettre (103) en retour, depuis le serveur à destination du terminal, le fichier de configuration (D_{1,1}) associé à ladite paire (B₁, C₁) selon la table de correspondance ;
- en cas d'absence de correspondance avec une paire (Bₓ, C_{y}) d'identifiants d'une couche matérielle et de système d'exploitation de la table de correspondance (II),
identifier (104), dans la table de correspondance (II) et par application de règles préétablies, une paire (Bₓ, C_{y}) d'identifiants d'une couche matérielle et de système d'exploitation la plus proche de celle du jeu d'identifiants (B₁, C₁) transmis depuis le terminal, puis transmettre (105) en retour, depuis le serveur à destination du terminal, le fichier de configuration (D_{x,y}) associé à la combinaison identifiée (Bₓ, C_{y}) selon la table de correspondance (II), ledit fichier étant transmis avec un indicateur (Z) qualifiant le fichier de configuration (D_{x,y}, Z) de temporaire ;
c. alimenter (106) la base de données avec le jeu d'identifiants reçus (A₁, B₁, C₁) et l'éventuelle association découlant de l'identification (B₁, C₁, D_{x,y}, Z).

6. Procédé selon la revendication 5, comprenant en outre :
f. à réception sur le serveur depuis le terminal d'une commande de validation du fichier de configuration temporaire, supprimer (112) un indicateur (Z) qualifiant le fichier de temporaire dans l'association correspondante (B₁, C₁, D_{x,y}, Z) de la base de données.

7. Terminal (1) configuré pour la mise en œuvre d'un procédé selon l'une des revendications 3 à 4.

8. Serveur (2) configuré pour la mise en œuvre d'un procédé selon l'une des revendications 5 à 6.

9. Programme informatique comportant des instructions pour la mise en œuvre du procédé selon l'une des revendications 3 à 6 lorsque ce programme est exécuté par un processeur.

10. Support d'enregistrement non transitoire lisible par un ordinateur sur lequel est enregistré un programme pour la mise en œuvre du procédé selon l'une des revendications 3 à 6 lorsque ce programme est exécuté par un processeu

## Patentansprüche

1. System aufweisend mindestens ein Endgerät (1) und einen Server (2), die eingerichtet sind, miteinander zu kommunizieren, **dadurch gekennzeichnet, dass** das System ferner eine Backend-Anwendung und eine entsprechende Frontend-Anwendung aufweist, die auf dem Server bzw. dem Endgerät installiert sind, wobei der Server Zugriff auf mindestens eine Datenbank (3) hat, die aufweist:
- eine Liste (I) mit Sätzen von Identifikatoren, wobei jeder Identifikatoren-Satz aufweist:
* einen Endgerät-Identifikator (A),
* einen Hardwareschicht-Identifikator (B),
* einen Betriebssystem-Identifikator (C);
- eine Korrespondenztabelle (II) einer Korrespondenz zwischen
* jedem in der Liste (I) vorhandenen Paar (Bₓ; C_{y}) aus Hardwareschicht-Identifikator und Betriebssystem-Identifikator, und
* einer Konfigurationsdatei (D_{x,y}), die selbst auch in der mindestens einen Datenbank gespeichert ist,
wobei das Endgerät und der Server in Koordination miteinander konfiguriert sind, um bei der Eröffnung einer Kommunikationssitzung zwischen dem Endgerät und dem Server:
a) einen Satz von Identifikatoren, der einen Identifikator (A₁) des Endgeräts, einen Identifikator (B₁) einer Hardwareschicht des Endgeräts und einen Identifikator (C₁) eines auf dem Endgerät verwendeten Betriebssystems aufweist, aus dem Endgerät zu dem Server zu senden (101);
b) bei Empfang des Satzes Identifikatoren (A₁, B₁, C₁) aus dem Endgerät an dem Server (diesen Satz) mit dem Inhalt der Datenbank zu vergleichen (102) und
- im Fall einer Korrespondenz zwischen dem gesendeten Satz Identifikatoren (A₁, B₁, C₁) und einem Satz Identifikatoren der Liste (I) die Kommunikationssitzung ohne Aktualisierung der Konfiguration des Endgeräts fortzusetzen;
- im Fall einer fehlenden Korrespondenz zwischen dem gesendeten Satz Identifikatoren (A₁, B₁, C₁) und den Identifikatoren-Sätzen der Liste (I) und im Fall einer Korrespondenz mit einem Paar (B₁, C₁) aus Hardwareschicht-Identifikator und Betriebssystem-Identifikator der Korrespondenztabelle (II) die Konfigurationsdatei (D_{1,1}), die gemäß der Korrespondenztabelle mit dem Paar (B₁, C₁) verknüpft ist, aus dem Server zu dem Endgerät rückzusenden (103);
- im Fall einer fehlenden Korrespondenz mit einem Paar (Bₓ, C_{y}) aus Hardwareschicht-Identifikator und Betriebssystem-Identifikator der Korrespondenztabelle (II),
in der Korrespondenztabelle (II) und durch Anwenden von vorab festgesetzten Regeln ein Paar (Bₓ, C_{y}) aus Hardwareschicht-Identifikator und Betriebssystem-Identifikator, das demjenigen des aus dem Endgerät gesendeten Identifikatoren-Satzes (B₁, C₁) am nächsten ist, zu identifizieren (104), dann die Konfigurationsdatei (D_{x,y}), die gemäß der Korrespondenztabelle (II) mit der identifizierten Kombination (Bₓ, C_{y}) verknüpft ist, aus dem Server zu dem Endgerät rückzusenden (105), wobei die Datei mit einem Indikator (Z) gesendet wird, der die Konfigurationsdatei (D_{x,y}, Z) als temporär qualifiziert;
c) die Datenbank mit dem Satz empfangener Identifikatoren (A₁, B₁, C₁) und der aus der Identifikation (B₁, C₁, D_{x,y}, Z) gewonnenen potentiellen Verknüpfung zu füttern (106),
d) bei Empfang einer Konfigurationsdatei (D_{1,1}; D_{x,y}, Z) aus dem Server an dem Endgerät die Konfigurationsdatei in der Frontend-Anwendung zu implementieren (107), und
falls und nur falls die Konfigurationsdatei Träger eines die Datei als temporär qualifizierenden Indikators (Z) ist, die Frontend-Anwendung in einen Testmodus zu setzen (108).

2. System nach Anspruch 1, in welchem das Endgerät und der Server ferner konfiguriert sind, um:
e) als Antwort auf eine vorgegebene Validierungsaktion durch den Nutzer via das Endgerät
einen die Datei als temporär qualifizierenden Indikator (Z) auf dem Endgerät zu löschen (109),
die Frontend-Anwendung in einen Normalmodus zu setzen (110),
einen Validierungsbefehl der temporären Konfigurationsdatei aus dem Endgerät zu dem Server zu senden (111),
f) bei Empfang des Validierungsbefehls der temporären Konfigurationsdatei aus dem Endgerät an dem Server einen die Datei als temporär qualifizierenden Indikator (Z) in der entsprechenden Verknüpfung (B₁, C₁, D_{x,y}, Z) der Datenbank zu löschen (112).

3. Konfigurationsverfahren, das von einem Endgerät (1) durchgeführt wird, das eingerichtet ist, mit einem Server (2) zu kommunizieren, **dadurch gekennzeichnet, dass** eine Backend-Anwendung und eine entsprechende Frontend-Anwendung auf dem Server bzw. dem Endgerät installiert sind, wobei der Server Zugriff auf mindestens eine Datenbank (3) hat, die aufweist:
- eine Liste (I) mit Sätzen von Identifikatoren, wobei jeder Identifikatoren-Satz aufweist:
* einen Endgerät-Identifikator (A),
* einen Hardwareschicht-Identifikator (B),
* einen Betriebssystem-Identifikator (C);
- eine Korrespondenztabelle (II) einer Korrespondenz zwischen
* jedem in der Liste (I) vorhandenen Paar (Bₓ; C_{y}) aus Hardwareschicht-Identifikator und Betriebssystem-Identifikator, und
* einer Konfigurationsdatei (D_{x,y}), die selbst auch in der mindestens einen Datenbank gespeichert ist,
wobei das Verfahren bei der Eröffnung einer Kommunikationssitzung zwischen dem Endgerät und dem Server aufweist:
a) Senden (101) eines Satzes von Identifikatoren, der einen Identifikator (A₁) des Endgeräts, einen Identifikator (B₁) einer Hardwareschicht des Endgeräts und einen Identifikator (C₁) eines auf dem Endgerät verwendeten Betriebssystems aufweist, aus dem Endgerät zu dem Server;
d) bei Empfang einer Konfigurationsdatei (D_{1,1}; D_{x,y}, Z) aus dem Server an dem Endgerät, Implementieren (107) der Konfigurationsdatei in der Frontend-Anwendung, und
falls und nur falls die Konfigurationsdatei Träger eines die Datei als temporär qualifizierenden Indikators (Z) ist, Setzen (108) der Frontend-Anwendung in einen Testmodus.

4. Verfahren nach Anspruch 3, ferner aufweisend:
e) als Antwort auf eine vorgegebene Validierungsaktion durch den Nutzer via das Endgerät
Löschen (109) eines die Datei als temporär qualifizierenden Indikators (Z) auf dem Endgerät,
Setzen (110) der Frontend-Anwendung in einen Normalmodus,
Senden (111) eines Validierungsbefehls der temporären Konfigurationsdatei aus dem Endgerät zu dem Server.

5. Konfigurationsverfahren, das von einem Server (2) durchgeführt wird, der eingerichtet ist, mit mindestens einem Endgerät (1) zu kommunizieren, **dadurch gekennzeichnet, dass** eine Backend-Anwendung und eine entsprechende Frontend-Anwendung auf dem Server bzw. dem Endgerät installiert sind, wobei der Server Zugriff auf mindestens eine Datenbank (3) hat, die aufweist:
- eine Liste (I) mit Sätzen von Identifikatoren, wobei jeder Identifikatoren-Satz aufweist:
* einen Endgerät-Identifikator (A),
* einen Hardwareschicht-Identifikator (B),
* einen Betriebssystem-Identifikator (C);
- eine Korrespondenztabelle (II) einer Korrespondenz zwischen
* jedem in der Liste (I) vorhandenen Paar (Bₓ; C_{y}) aus Hardwareschicht-Identifikator und Betriebssystem-Identifikator, und
* einer Konfigurationsdatei (D_{x,y}), die selbst auch in der mindestens einen Datenbank gespeichert ist,
wobei das Verfahren bei der Eröffnung einer Kommunikationssitzung zwischen dem Endgerät und dem Server aufweist:
b) bei Empfang eines Satzes Identifikatoren (A₁, B₁, C₁) aus dem Endgerät an dem Server, Vergleichen (102) mit dem Inhalt der Datenbank, und
- im Fall einer Korrespondenz zwischen dem gesendeten Satz Identifikatoren (A₁, B₁, C₁) und einem Satz Identifikatoren der Liste (I), Fortsetzen der Kommunikationssitzung ohne Aktualisierung der Konfiguration des Endgeräts;
- im Fall einer fehlenden Korrespondenz zwischen dem gesendeten Satz Identifikatoren (A₁, B₁, C₁) und den Identifikatoren-Sätzen der Liste (I) und im Fall einer Korrespondenz mit einem Paar (B₁, C₁) aus Hardwareschicht-Identifikator und Betriebssystem-Identifikator der Korrespondenztabelle (II), Rücksenden (103) der Konfigurationsdatei (D_{1,1}), die gemäß der Korrespondenztabelle mit dem Paar (B₁, C₁) verknüpft ist, aus dem Server zu dem Endgerät;
- im Fall einer fehlenden Korrespondenz mit einem Paar (Bₓ, C_{y}) aus Hardwareschicht-Identifikator und Betriebssystem-Identifikator der Korrespondenztabelle (II),
Identifizieren (104) eines Paars (Bₓ, C_{y}) aus Hardwareschicht-Identifikator und Betriebssystem-Identifikator, das demjenigen des aus dem Endgerät gesendeten Identifikatoren-Satzes (B₁, C₁) am nächsten ist, in der Korrespondenztabelle (II) und durch Anwenden von vorab festgesetzten Regeln, dann Rücksenden (105) der Konfigurationsdatei (D_{x,y}), die gemäß der Korrespondenztabelle (II) mit der identifizierten Kombination (Bₓ, C_{y}) verknüpft ist, aus dem Server zu dem Endgerät, wobei die Datei mit einem Indikator (Z) gesendet wird, der die Konfigurationsdatei (D_{x,y}, Z) als temporär qualifiziert;
c) Füttern (106) der Datenbank mit dem Satz empfangener Identifikatoren (A₁, B₁, C₁) und der aus der Identifikation (B₁, C₁, D_{x,y}, Z) gewonnenen potentiellen Verknüpfung.

6. Verfahren nach Anspruch 5, ferner aufweisend:
f) bei Empfang eines Validierungsbefehls der temporären Konfigurationsdatei aus dem Endgerät an dem Server, Löschen (112) eines die Datei als temporär qualifizierenden Indikators (Z) in der entsprechenden Verknüpfung (B₁, C₁, D_{x,y}, Z) der Datenbank.

7. Endgerät (1), das für die Durchführung eines Verfahrens nach einem der Ansprüche 3 bis 4 konfiguriert ist.

8. Server (2), der für die Durchführung eines Verfahrens nach einem der Ansprüche 5 bis 6 konfiguriert ist.

9. Informatikprogramm aufweisend Befehle zum Durchführen des Verfahrens nach einem der Ansprüche 3 bis 6, wenn dieses Programm von einem Prozessor ausgeführt wird.

10. Nichtflüchtiger, von einem Computer lesbarer Datenträger mit einem darauf gespeicherten Programm zum Durchführen des Verfahrens nach einem der Ansprüche 3 bis 6, wenn dieses Programm von einem Prozessor ausgeführt wird.

## Claims

1. A system comprising at least a terminal (1) and a server (2) capable of communicating with each other, **characterised in that** the system further comprises a back-end application and a corresponding front-end application respectively installed on the server and the terminal, the server having access to at least one database (3) comprising:
- a list (I) of sets of identifiers, each set of identifiers comprising
* a terminal identifier (A),
* a hardware layer identifier (B), and
* an operating system identifier (C);
- a correspondence table (II) between
* each hardware layer and operating system identifier pair (Bₓ; C_{y}) existing in said list (I), and
* a configuration file (D_{x,y}), itself stored in the at least one database, the terminal and the server being configured in coordination with each other for, on opening a communication session between the terminal and the server:
a. transmitting (101), from the terminal to the server, a set of identifiers comprising an identifier (A₁) of the terminal, an identifier (B₁) of a hardware layer of the terminal, and an identifier (C₁) of the operating system implemented on the terminal;
b. on receipt on the server, from the terminal, of the set of identifiers (A₁, B₁, C₁), comparing (102) to the contents of the database, and
- in the event of a match between the set of identifiers (A₁, B₁, C₁) transmitted and a set of identifiers of said list (I), continuing the communication session without updating the terminal configuration;
- in the event of no match between the set of identifiers (A₁, B₁, C₁) transmitted and the sets of identifiers of said list (I), and in the event of a match with a hardware layer and operating system identifier pair (B₁, C₁) of the correspondence table (II), transmitting (103) in return, from the server to the terminal, the configuration file (D_{1,1}) associated with said pair (B₁, C₁) according to the correspondence table;
- in the event of no match with a hardware layer and operating system identifier pair (Bₓ, C_{y}) of the correspondence table (II),
identifying (104), in the correspondence table (II) and by applying predefined rules, a hardware layer and operating system identifier pair (Bₓ, C_{y}) closest to that of the set of identifiers (B₁, C₁) transmitted from the terminal, then transmitting (105) in return, from the server to the terminal, the configuration file (D_{x,y}) associated with the identified combination (Bₓ, C_{y}) according to the correspondence table (II), said file being transmitted with an indicator (Z) qualifying the configuration file (D_{x,y}, Z) as temporary;
c. feeding (106) the database with the set of identifiers (A₁, B₁, C₁) received and any association resulting from the identification (B₁, C₁, D_{x,y}, Z)
d. on receipt of a configuration file (D_{1,1}; D_{x,y}, Z) on the terminal from the server, implementing (107) said configuration file in the front-end application, and
if and only if said configuration file contains an indicator (Z) qualifying the file as temporary, switching (108) the front-end application to a test mode.

2. The system according to claim 1, wherein the terminal and the server are furthermore configured for:
e. in response to a predetermined validation action by the user via the terminal, deleting (109) an indicator (Z) qualifying the file as temporary on the terminal, switching (110) the front-end application to a normal mode,
transmitting (111), from the terminal to the server, a validation command of said temporary configuration file
f. on receipt on the server, from the terminal, of the validation command of the temporary configuration file on the server, deleting (112) an indicator (Z) qualifying the temporary file in the corresponding association (B₁, C₁, D_{x,y}, Z) of the database.

3. A configuration method implemented by a terminal (1) capable of communicating with a server (2), **characterised in that** a back-end application and a corresponding front-end application are respectively installed on the server and the terminal, the server having access to at least one database (3) comprising:
- a list (I) of sets of identifiers, each set of identifiers comprising
* a terminal identifier (A),
* a hardware layer identifier (B), and
* an operating system identifier (C);
- a correspondence table (II) between
* each hardware layer and operating system identifier pair (Bₓ; C_{y}) existing in said list (I), and
* a configuration file (D_{x,y}), itself stored in the at least one database, the method comprising, on opening a communication session between the terminal and the server:
a. transmitting (101), from the terminal to the server, a set of identifiers comprising an identifier (A₁) of the terminal, an identifier (B₁) of a hardware layer of the terminal, and an identifier (C₁) of the operating system implemented on the terminal;
d. on receipt of a configuration file (D_{1,1}; D_{x,y}, Z) on the terminal from the server, implementing (107) said configuration file in the front-end application, and
if and only if said configuration file contains an indicator (Z) qualifying the file as temporary, switching (108) the front-end application to a test mode.

4. The method according to claim 3, further comprising:
e. in response to a predetermined validation action by the user via the terminal, deleting (109) an indicator (Z) qualifying the file as temporary on the terminal, switching (110) the front-end application to a normal mode,
transmitting (111), from the terminal to the server, a validation command of said temporary configuration file.

5. A configuration method implemented by a server (2) capable of communicating with at least one terminal (1), **characterised in that** a back-end application and a corresponding front-end application are respectively installed on the server and the terminal, the server having access to at least one database (3) comprising:
- a list (I) of sets of identifiers, each set of identifiers comprising
* a terminal identifier (A),
* a hardware layer identifier (B), and
* an operating system identifier (C);
- a correspondence table (II) between
* each hardware layer and operating system identifier pair (Bₓ; C_{y}) existing in said list (I), and
* a configuration file (D_{x,y}), itself stored in the at least one database, the method comprising, on opening a communication session between the terminal and the server: b. on receipt on the server, from the terminal, of a set of identifiers (A₁, B₁, C₁), comparing (102) to the contents of the database, and
- in the event of a match between the set of identifiers (A₁, B₁, C₁) transmitted and a set of identifiers of said list (I), continuing the communication session without updating the terminal configuration;
- in the event of no match between the set of identifiers (A₁, B₁, C₁) transmitted and the sets of identifiers of said list (I), and in the event of a match with a hardware layer and operating system identifier pair (B₁, C₁) of the correspondence table (II), transmitting (103) in return, from the server to the terminal, the configuration file (D_{1,1}) associated with said pair (B₁, C₁) according to the correspondence table;
- in the event of no match with a hardware layer and operating system identifier pair (Bₓ, C_{y}) of the correspondence table (II),
identifying (104), in the correspondence table (II) and by applying predefined rules, a hardware layer and operating system identifier pair (Bₓ, C_{y}) closest to that of the set of identifiers (B₁, C₁) transmitted from the terminal, then transmitting (105) in return, from the server to the terminal, the configuration file (D_{x,y}) associated with the identified combination (Bₓ, C_{y}) according to the correspondence table (II), said file being transmitted with an indicator (Z) qualifying the configuration file (D_{x,y}, Z) as temporary;
c. feeding (106) the database with the set of identifiers (A₁, B₁, C₁) received and any association resulting from the identification (B₁, C₁, D_{x,y}, Z).

6. The method according to claim 5, further comprising:
f. on receipt on the server, from the terminal, of a validation command of the temporary configuration file on the server, deleting (112) an indicator (Z) qualifying the temporary file in the corresponding association (B₁, C₁, D_{x,y}, Z) of the database.

7. A terminal (1) configured for implementing a method according to one of claims 3 to 4.

8. A server (2) configured for implementing a method according to one of claims 5 to 6.

9. A computer program comprising instructions for implementing the method according to one of claims 3 to 6, when this program is executed by a processor.

10. A non-transitory computer-readable recording medium having a program recorded thereon for implementing the method according to one of claims 3 to 6, when this program is executed by a processor.
